# FASCICULE DE BREVET EUROPEEN

(11) **EP 2 872 566 B1**
(45) Date de publication et mention de la délivrance du brevet: **08.05.2024**
(21) Numéro de dépôt: 13744724.9
(22) Date de dépôt: 10.07.2013
(51) Int. Cl.: C08L 91/00, C08L 93/00, E04B 1/66, C08L 95/00

(54) **MEMBRANE D'ETANCHÉITÉ À BASE D'UN LIANT D'ORIGINE VÉGÉTALE**
ABDICHTUNGSMEMBRAN AUF BASIS VON EINEM BINDEMITTEL PLANZLICHER URSPRUNGS
SEALING MEMBRANE BASED ON A BINDER OF VEGETAL ORIGIN

(30) Priorité: 11.07.2012 FR 1256682
(43) Date de publication de la demande: 20.05.2015
(73) Titulaire: SAINT-GOBAIN WEBER, 94370 Sucy-en-Brie (FR)
(72) Inventeur: HESSELBARTH, Frank, 45659 Recklinghausen (DE); OPDENBUSCH, Kersten, 45711 Datteln (DE)
(74) Mandataire: Saint-Gobain Recherche
(86) Numéro de dépôt international: PCT/FR2013/051653
(87) Numéro de publication internationale: WO 2014/009660

(56) Documents cités:
- EP-A1- 1 466 878
- EP-A1- 1 930 304
- AT-B- 406 375
- DE-A1- 10 150 601
- GB-A- 2 205 104

## Description

### Domaine technique de l'invention

La présente invention a pour objet un kit à deux composantes pour la préparation d'une membrane d'étanchéité, dont une des composantes est un liant d'origine végétale, ainsi que le procédé de fabrication de ladite membrane, les produits de construction revêtus d'une telle membrane et l'utilisation de la membrane.

### Art antérieur

De nombreux produits de construction doivent être protégés contre l'humidité du sol et l'eau d'infiltration et doivent être revêtus de membranes d'étanchéité, pour des utilisations intérieures et extérieures durables. Les sous-sols d'immeubles, garages souterrains, balcons, terrasses, pièces humides, murs d'appuis, etc. sont ainsi habituellement rendus étanches par application de revêtements épais.

Des systèmes d'étanchéité connus peuvent être à base de liants bitumineux, à base de ciments ou de boues d'étanchéité minérales. Au cours des dernières décennies, de nombreux systèmes à base de bitume modifié par des polymères ont été développés. En effet, la viscoélasticité du bitume le rend tout à fait adapté à ce type d'applications.

Le bitume est un produit dérivé de la distillation du pétrole brut et fait donc partie des matières premières dites non renouvelables. D'autre part, des classifications récentes établies par le CIRC (Agence Internationale de Recherche sur le Cancer) ont classés les bitumes et leurs émissions dans des groupes de produits probablement et possiblement cancérogènes pour l'homme lorsque travaillés à chaud.

Il existe donc une nécessité de trouver de nouveaux liants pouvant se substituer aux liants bitumineux traditionnellement utilisés, tout en conservant les propriétés de viscoélasticité et d'imperméabilité recherchées pour les applications décrites ci-dessus.

Le document DE 101 50 601 décrit des compositions bi-composantes pour revêtements pour ouvrages de construction à base de résines époxyde de type biphénol A ou F. Ces produits présentent l'inconvénient d'être nocifs pour l'environnement et sont relativement compliqués à manipuler pendant l'application du revêtement.

Les demandes WO 2007/054148 ou DE 199 47 527 décrivent des compositions pour revêtements sans bitume comprenant une dispersion de polymères synthétiques avec respectivement des charges inertes allégées ou de la poudre de caoutchouc avec éventuellement du ciment.

Ces liants restent toutefois des polymères synthétiques.

Il existe aujourd' hui un besoin pour remplacer des produits synthétiques par des ressources renouvelables, notamment d'origine naturelle. C'est dans ce cadre que s'inscrit la présente invention.

### Description sommaire de l'invention

La présente invention décrit un kit à deux composantes pour la préparation d'une membrane d'étanchéité constituée de deux constituants A et B dans lequel,
- le constituant A comprend au moins un liant d'origine sous forme d'une émulsion aqueuse,
   ledit liant comprenant le mélange d'au moins une résine naturelle d'origine végétale, et
- le constituant B est susceptible de libérer au moins un cation polyvalent lors de sa réaction avec le composant A.

La présente invention décrit également un procédé de fabrication d'une membrane d'étanchéité, ainsi que la membrane obtenue par ce procédé, les produits de constructions revêtus de cette membrane et l'utilisation de la membrane.

### Description détaillée de l'invention

Le kit selon la présente invention est un kit à deux composant es séparées.

Le fait que le constituant B libère un cation polyvalent lors de sa réaction avec le constituant A permet notamment de casser l'émulsion aqueuse.

Le constituant A comprend au moins un liant d'origine végétale se présentant sous forme d'une émulsion aqueuse.

Ledit liant comprend un mélange d'une résine naturelle, éventuellement modifiée, d'origine végétale ayant un point de ramollissement mesuré selon la norme ISO 4625 de 30 à 200°C avec au moins une huile d'origine végétale ayant une viscosité à 25°C comprise entre 50 mPa.s et 1000 Pa.s.

Ledit liant obtenu par ce mélange a une pénétrabilité à 25°C, mesurée selon la norme EN1426, de 20 à 300 1/10 mm et un point de ramollissement, mesuré selon la norme EN1427, de 30 à 75°C.

Un tel liant est décrit dans la demande de brevet EP 1 466 878.

Il est caractérisé par une pénétrabilité mesurée selon la norme NF EN 1426, exprimée en dixième de millimètre et une température de ramollissement, exprimée en degré centigrade et mesurée selon la norme NF EN1427.

Les résines utilisées peuvent être des résines naturel les, ou être éventuellement modifiées par transformation chimique. On parle alors de résine naturelle modifiée.

Les résines présentes dans le liant d'origine végétale peuvent être choisies parmi :
- les résines accroïdes,
- le damnar,
- les colophanes tels que les colophanes de gemme, les colophanes de bois ou les colophanes de tall oil, les colophanes hydrogénéisées, les colophanes dismutées, les colophanes polymérisées ou les colophanes maléisées,
- les esters de colophanes, tels que les esters du glycérol et de colophanes naturelles, hydrogénées, dismutées et maléisées, et les esters du pentaérythritol et de colophanes naturelles et hydrogénées,
- les savons de colophanes et
- les résinates métalliques tels que les carboxylates métalliques obtenus à partir de colophanes naturelles ou modifiées, les résinates de calcium, les résinatesde zinc et les résinates mixtes de calcium et de zinc et
- les copals.

La ou les résines naturelles, éventuellement modifiées représentent en général entre 2 et 98% de préférence entre 25 et 95% encore plus préférentiellement entre 40 et 70%en poids, par rapport au poids total du liant d'origine végétal.

L'huile d'origine végétale présente dans le liant peut être une huile brute ou raffinée, éventuellement modifiée par une transformation chimique telle que l'estérification. L'huile végétale peut être choisie parmi, les huiles de lin, de colza, de tournesol de soja, d'olive, de palme, de ricin, de bois, de maïs, de courge, de pépins de raisins, de jojoba, de sésame, de noix, de noisette, d'amande, de karité, de macadamia, de coton, de luzerne, de seigle, de carthame, d'arachide et de coprah.

La ou les huiles végétales représentent en général entre 2 et 98% de préférence entre 5 et 75% et encore plus préférentiellement entre 30 et 60% en poids, par rapport au poids total du liant d'origine végétal.

Le liant de nature végétale représente entre 20 et 90% poids, de préférence entre 30 et 60%poids du constituant A.

Il est essentiel que le liant se trouve sous une forme émulsifiée, pour que l'application de la membrane soit possible, sans effet nocif, dans une gamme de température comprise entre 1 et 45°C, de préférence entre 5 et 30°C.

Le liant utilisé dans la présente invention permet avantageusement de ne pas utiliser de solutions à base de solvant.

Le liant d'origine végétale est une émulsion anionique, cationique ou non-ionique ou le mélange d'une émulsion anionique et d'une émulsion cationique.

Pour une application en tant que membrane d'étanchéité, il est nécessaire de produire des émulsions stables qui puissent être stockées, transportées puis mélangées par exemple avec les liants hydrauliques, ce qui permet d'avoir un temps d'application suffisant. A titre de comparaison, pour des applications dans le domaine des travaux publics et des couches d'asphalte, il est souhaitable que le temps d'ouverture, c'est-à-dire le temps jusqu'à la prise soit le plus court possible. Dans ces cas précis, les émulsions bitumineuses doivent immédiatement se casser lorsqu'elles sont en contact avec des charges minérales ou du ciment.

Selon la présente invention, l'émulsion est stabilisée par ajout de tensioactifs classiques, cationiques, anioniques et/ ou non-ioniques de telle sorte qu'une fois combinée avec le constituant B, le produit obtenu après mélange et réaction ait une durée d'application finie et un séchage rapide.

L'émulsion est, de préférence, rendue stable par au moins un tensioactif cationique, anionique et/ou non-ionique, combiné avec au moins un agent stabilisant et un système tampon. Le système tampon permet notamment d'éviter d'importantes variations de pH lors du mélange avec le composant B.

Les tensioactifs (ou émulsifiants) non ioniques ou anioniques sont par exemple choisis parmi les acides gras d' huile de pin, la colophane d' huile de pin, la lignine issue de lignocellulose traitée par de l'acide sulfurique (encore appelée « lignine kraft »), les résines de pins comme par exemple la résine Vinsol^{®}, les sels alcalins, les sels alcalino-terreux, les aminoalkylbétaines d'acides gras, les protéines, les tensioactifs non ioniques de type acides gras ét hoxylés linéaires ou ramifiés.

Les tensioactifs cationiques sont choisis parmi les polyamines, les polyamides, les polyamidoamines, les imidazolines sous leur forme cationique ou de sels quaternaires d'ammonium.

L'agent stabilisant peut être choisi parmi la bentonite, la sepiolite, les résines maléiques, les esters maléiques, la vinylpyrrolidone ou les sulfonates de lignine.

Le système tampon peut être choisi parmi des mélanges acide acétique/ acétates d'alcalin, ou acides organiques / sels correspondants, ammoniac / chlorure d'ammoniac, phosphates alcalins/ monohydrogénophosphates di-alcalins, monohydrogénophosphates di-alcalins / dihydrogénophosphate monalcalin, dihydrogénophosphate monalcalin/ acide phosphorique, hydrogénocarbonate/ carbonate, borate alcalin/acide borique.

Le constituant B est un composé susceptible de libérer au moins un cation polyvalent lors de sa réaction avec le composant A.

La réaction des deux constituants A et B lors de leur mélange entraîne une libération de cations polyvalents dans la solution aqueuse. La présence de tels ions provoque le cassage de l'émulsion et rend le produit facilement applicable sous forme de film.

Lorsque le liant d'origine végétale est une émulsion cationique, le constituant B est une solution aqueuse de cations polyvalents contenant par exemple des ions Al³⁺, Mg²⁺, Ca²⁺...

Dans ce cas, le durcissement de la membrane après application est obtenu par évaporation de l'eau provenant des différents constituants.

De façon préférée, le liant d'origine végétale est une émulsion anionique ou non-ionique, ou le mélange d'une émulsion anionique et d'une émulsion non ionique et le constituant B est sous forme de poudre, et comprend éventuellement un liant hydraulique.

Le procédé de durcissement de la membrane est alors le résultat d'une combinaison entre l'évaporation d'eau et de l'hydratation du liant hydraulique.

Le liant hydraulique est un ciment choisi parmi le ciment Portland, ciment de mélange pouzzolanique comprenant éventuellement des cendres volantes, des laitiers de hauts fourneaux, de la fumée de silice et/ou des pouzzolanes naturelles ou calcinées ou synthétiques, le ciment alumineux, le ciment sulfoalumineux, le ciment bélitique, ainsi que leurs mélanges.

Dans le kit pour la préparation de la membrane d'étanchéité selon la présente invention, le rapport massique entre le constituant A et le constituant B est compris entre 1 :1 et 20 :1, et de préférence entre 3 :1 et 5 :1.

Le constituant A peut comprendre en outre une dispersion aqueuse de polymères, comprenant entre 20 et 70% poids, et très préférentiellement entre 50 et 65%poids de matières solides. Ladite dispersion représente entre 2 et 80%poids du constituant A, de préférence entre 5 et 50%poids et encore plus préférentiellement entre 10 et 20%poids.

Sous le terme de dispersion de polymères au sens de la présente invention, on désigne de façon générique des particules de polymères naturels ou synthétiques, finement distribuées, dans des agents de dispersions aqueuses.

Le constituant B peut comprendre également une poudre polymère redispersible dans l'eau. La quantité de polymère représente typiquement entre 5 et 30%poids par rapport au poids du constituant B.

Les polymères peuvent être par exemple du caoutchouc synthétique ou naturel, des résines synthétiques ou des dispersions de plastiques.

De façon préférée, les dispersions de polymères utilisées dans les compositions de produit selon la présente invention sont des copolymères de styrène/ butadiène, des copolymères de styrène/ acrylate, des copolymères de vinyl acétates/ éthylène des esters alkyliques d'acides acryliques ou des hydrocarbures non aromatiques comprenant au moins deux doubles liaisons oléfiniques, comme par exemple l'isoprène et le chloroprène.

Les dispersions de polymères possédant des températures de formabilité de films inférieures à 5°C et une température de transition vitreuse inférieure à -5°C se sont montrées particulièrement appropriées pour la préparation de membrane d'étanchéité.

Les constituants A et/ou B peuvent également comprendre des fibres, naturelles ou synthétiques, comme par exemple des fibres de polyéthylène. Les constituants A et/ ou B peuvent en outre comprendre des charges inertes, encore appelées fillers, organiques ou inorganiques.

Comme fillers organiques, on peut citer des billes de polystyrène, des granulats de caoutchouc, du plastique recyclé, de préférence sous forme de particules ayant un diamètre compris entre 0,2 et 1,5 mm, et des microsphères creuses synthétiques d'une taille comprise préférentiellement entre 10 et 150 µm.

En tant que fillers inorganiques, on peut citer les microsphères creuses en céramique ou en verre, préférentiellement d'un diamètre compris entre 10 et 300 µm et les silicates. On citera par exemple les billes d'argile expansée, la bentonite, la sépiolithe.

La présence de charges inertes allégées permet notamment de faciliter la maniabilité et par conséquent de rendre son application plus facile car présentant une résistance moindre. L'application est d'autant plus facilitée lorsque les fillers sont des particules sphériques.

Il est préférable, pour faciliter l'application et limiter les émissions de poussières, que les constituants A et B aient des densités différentes.

Ainsi, préférentiellement, le constituant A a une masse volumique comprise entre 0,5 et 1,2 kg/l, de préférence entre 0,6 et 1 kg/l. Le constituant B a une masse volumique apparente comprise entre 0,8 à 2,5 kg/l, de préférence entre 1,5 et 1,8 kg/l.

La différence de densité permet avantageusement un mélange rapide, homogène et avec une émission de poussières réduite, des deux constituants du kit, avant l'application de la membrane.

Les constituants A et/ ou B peuvent comprendre d'autres additifs choisis parmi des tensio-actifs, des agents anti-moussants, des conservateurs, des épaississants, des agents de régulation de prise tels que des accélérateurs ou des retardateurs, des agents liquéfiants, des agents modificateurs de pH.

Les constituants A et/ou B peuvent en outre comprendre un agent colorant. De préférence, l'agent colorant est choisi pour permettre d'éclaircir la coloration de base de l'enduit, afin de lui donner une coloration finale claire, par exemple dans des tons blanc crème. D'autres colorations peuvent être choisies en fonction de l'application recherchée.

L'agent colorant peut être mélangé avec l'un des constituants A et/ou B, ou directement introduit dans le mélange.

Tout agent colorant ou pigment connu de l'homme de l'art peut être utilisé. De façon préférée, l'agent colorant est un pigment inorganique, de préférence sous forme de poudre, tel que l'oxyde de titane, l'oxyde de zirconium, l'oxyde de zinc ou autres colorants connus pour leur couleur claire. L'agent colorant peut également être un colorant organique comme les pigments azoïques ou les pigments polycycliques.

La teneur en agent colorant est de préférence comprise entre 0,1 et 10%en poids par rapport au poids des constituants A et/ou B.

Ceci présente un avantage par rapport aux compositions de produits connues de l'art antérieur et qui sont à base de bitume. En effet, en raison de leur couleur foncée, les revêtements bitumineux ont tendance à rapidement s'échauffer lorsque la température ambiante augmente, provoquant la formation de bulles à la surface des substrats poreux.

Un autre objet de la présente invention est le procédé d'application d'une membrane d'étanchéité obtenue à partir de la composition décrite ci-dessus. Les constituants A et B sont mélangés entre eux, par exemple manuellement, avec un mélangeur électrique ou directement dans une machine de projection et le mélange ainsi obtenu est déposé sous forme d'un revêtement sur un support.

Le produit obtenu après le mélange est suffisamment stable et possède une bonne maniabilité pour les applications souhaitées. Il présente une durée d'ouvrabilité finie qui permet de l'appliquer sous forme de revêtement sur le support.

La membrane susceptible d'être obtenue par le procédé décrit ci-dessus peut être déposée sur le support sous la forme d'un revêtement d'une épaisseur comprise entre 2 et 10 mm, de préférence entre 3 et 5 mm

L'application de la membrane sur le support est effectuée par toutes les techniques connues de l'homme de l'art. De façon classique, la membrane est appliquée par enduction par exemple à la taloche, ou à l'aide d'une machine de projection.

La membrane d'étanchéité selon la présente invention possède des caractéristiques de viscoélasticité conformes aux normes EN 15813 et EN 15818, et une aptitude à ponter les fissures conformes à la norme EN 15812.

Un autre objet de la présente invention est les produits de construction, tels que des parois, murs, chapes, sols, plafonds protégés contre l'humidité et recouverts d'une membrane d'étanchéité selon la présente invention.

Le produit obtenu selon la présente invention peut être utilisé, comme joints d'étanchéité dans toutes les applications de génie civil. Par exemple on citera l'imperméabilisation des toits, des fonds de bassins, etc...

L'enduit selon la présente invention peut également être avantageusement utilisé comme adhésif pour panneau de protection, panneau isolant et/ou panneau de drainage.

Les exemples ci-après illustrent l'invention, sans en limiter la portée.

### Exemples

### Exemple 1 (comparatif)

On prépare une émulsion bitumineuse Ede type anionique en mélangeant :
- de l'eau : 39%poids
- du bitume (pénétrabilité à 25°C, 100g, 5s selon EN 12591 70-100 et point de ramollissement compris entre 43 et 51 °C) : 57,5%poids et
- des additifs : 3,5%poids

La distribution des tailles de particules a été mesurée et 50%du volume total des particules ont une taille inférieure au d₅₀ qui vaut 1 µm.

### Exemple 2 ( constituant A selon l'invention) :

On prépare une émulsion anionique en mélangeant :
- de l'eau 39,2%poids
- un émulsifiant de type bétaine : 0,5%poids,
- un émulsifiant de type hydroxyde alcalin : 0,4%poids,
- un stabilisant (résine) : 0,3%poids
- un liant de nature végétale (par exemple liant Vegecol possédant un point de ramollissement 41,5°C, vendu par la société Colas) : 57,5%poids
- un conservateur : 0 ,3%poids,
- un épaississant : 1,4%poids
- un agent démoussant : 0,1%poids et
- un tampon pH : 0,3%poids.

La distribution des tailles de particules a été mesurée et 50%du volume total des particules ont une taille inférieure au d₅₀ qui vaut 1,3 µm.

### Exemple 3 ( constituant A selon l'invention) :

On prépare un mélange d'une émulsion anionique et d'une émulsion non-ionique en mélangeant :
- de l'eau 37,5%poids
- un émulsifiant de type amine grasse éthoxylée : 1,9%poids,
- un émulsifiant de type hydroxyde alcalin : 0,2%poids,
- un liant de nature végétale (par exemple liant Vegecol possédant un point de ramollissement 41,5°C, vendu par la société Colas) : 57,7%poids
- un conservateur : 0,3%poids,
- un épaississant : 2%poids
- un agent démoussant : 0,1%poids et
- un tampon pH : 0,3%poids.

La distribution des tailles de particules a été mesurée et 50%du volume total des particules ont une taille inférieure au d₅₀ qui vaut 1,5 µm.

### Exemple 4 (comparatif)

On mélange 85%poids de l'émulsion bitumineuse préparée dans l'exemple 1 avec :
- 0,7%poids de fibres de polyéthylène
- 1,3%poidsde billes de polystyrène d'un diamètre inférieur à 2 mm et
- 13%poids d'une dispersion de polymère.
- Le mélange obtenu est noté ci après A1.

### Exemple 5 (constituant A selon l'invention) :

De la même manière, on mélange 85%poids de l'émulsion anionique préparée dans l'exemple 2 avec :
- 0,7%poids de fibres de polyéthylène
- 1,3%poidsde billes de polystyrène d'un diamètre inférieur à 2 mm et
- 13%poids d'une dispersion de polymère.

Le mélange obtenu est noté ci après A2.

### Exemple 6 ( constituant A selon l'invention)

De la même manière, on mélange 85% poids de l'émulsion non ionique préparée dans l'exemple 3 avec :
- 0,7%poids de fibres de polyéthylène
- 1,3%poidsde billes de polystyrène d'un diamètre inférieur à 2 mm et
- 13%poids d'une dispersion de polymère

Le mélange obtenu est noté ci après A3.

### Exemple 7

Le constituant B1 est préparé en mélangeant :
- 72%poidsd'un mélange de ciment,
- 25%poidsde sable (<0,2 mm), et
- 3,0%poids d'agents régulateurs de prise.

Le produit selon la présente invention est préparé en mélangeant chacun des différents constituantsA1, A2 et A3 avec le constituant B1 décrit ci-dessus, dans un rapport pondéral de 4,5: 1.

**Tableau 1**

| Produit | Rapport pondéral A :B | Durée d'ouvrabilité (min) |
|---|---|---|
| Constituant A1 + Constituant B1 (comparatif) | 4,5 :1 | 60 |
| Constituant A2 + Constituant B1 | 4,5 :1 | 20 |
| Constituant A3 + constituant B1 | 4,5/ 1 | 60 |

Les trois compositions de membrane d'étanchéité testées présentent des durées de séchage équivalentes.

Des tests d'aptitude à ponter les fissures ont été réalisés sur l'échantillon obtenu par mélange des constituants A3 et B1, et ont montré que le matériau obtenu était conforme à la norme EN 15812.

### Exemple 8 ( Constituant A selon l'invention) :

Un constituant A4 est préparé en mélangeant 97%poids du constituant A2 tel que décrit dans l'exemple 5, avec 3%poids de poudre de dioxyde de titane (agent colorant).

### Exemple 9 ( constituant B selon l'invention) :

Un constituant B2 est préparé en mélangeant 94% poids du constituant B1 avec 6%poids de poudre de dioxyde de titane (agent colorant).

**Tableau 2**

| Produit | Rapport pondéral A :B | coloration |
|---|---|---|
| Constituant A4 + Constituant B1 | 4,5 :1 | beige |
| Constituant A3 + Constituant B2 | 4,5 :1 | beige |
| Constituant A1 + constituant B1 | 4,5 :1 | Foncé |

Les membranes d'étanchéité obtenues par mélange des constituants A4/ B1 et A3/ B2, ainsi que le produit comparatif à base de bitume formé en mélangeant les constituants A1/ B1 ont été appliqués sur des substrats en béton riche en cavités et exposés au soleil. Après deux heures d'exposition, la membrane d'étanchéité à base de bitume était recouverte de boursoufflures visibles, alors que les membranes d'étanchéité A4/ B1 et A3/ B2 selon la présente invention ne présentaient aucune boursoufflure.

## Revendications

1. Kit à deux composantes pour la préparation de membrane d'étanchéité **caractérisé en ce qu'**il est constitué de,
- un constituant A comprenant au moins un liant d'origine végétale sous forme d'une émulsion aqueuse qui est une émulsion anionique, non-ionique ou un mélange d'une émulsion anionique et d'une émulsion non ionique,
ledit liant comprenant le mélange d'au moins une résine naturelle d'origine végétale avec au moins une huile d'origine végétale, et
- un constituant B susceptible de libérer au moins un cation polyvalent lors de sa réaction avec le composant A, ledit constituant B étant une poudre comprenant un ciment choisi parmi le ciment Portland, ciment de mélange pouzzolanique comprenant éventuellement des cendres volantes, des laitiers de hauts fourneaux, de la fumée de silice et/ou des pouzzolanes naturelles ou calcinées ou synthétiques, le ciment alumineux, le ciment sulfoalumineux, le ciment bélitique, ainsi que leurs mélanges.

2. Kit selon la revendication 1 **caractérisé en ce que** ledit liant ayant une pénétrabilité à 25°C, mesurée selon la norme EN1426, de 20 à 300 1/10 mm et un point de ramollissement, mesuré selon la norme EN1427 de 30 à 75°C.

3. Kit selon l'une des revendications 1 ou 2 **caractérisé en ce que** le rapport massique entre le constituant A et le constituant B est compris entre 1 :1 et 20 :1, de préférence entre 3 :1 et 5 :1.

4. Kit selon l'une des revendications 1 à 3 **caractérisé en ce que** le liant d'origine végétale représente entre 20 et 90% en poids, de préférence entre 30 et 60% en poids du constituant A.

5. Kit selon l'une des revendications 1 à 4 **caractérisé en ce que** le constituant B comprend des charges inorganiques.

6. Kit selon l'une des revendications 1 à 5 **caractérisé en ce que** le constituant A comprend en outre une dispersion aqueuse de polymères comprenant entre 20 et 70% en poids, de préférence entre 50 et 65% en poids, de matières solides, ladite dispersion représentant entre 2 et 80% poids du constituant A, de préférence entre 5 et 50% poids et encore plus préférentiellement entre 10 et 20% poids du constituant A.

7. Kit selon l'une des revendications 1 à 6 **caractérisé en ce que** le constituant B comprend une poudre polymère redispersible dans l'eau, en une quantité comprise entre 5 et 30% poids par rapport au constituant B.

8. Kit selon l'une des revendications précédentes **caractérisé en ce que** le constituant A comprend en outre des charges organiques choisies parmi des billes de polystyrène expansé, des granulats de caoutchouc, du plastique recyclé, de préférence sous forme de particules ayant un diamètre compris entre 0,2 et 1,5 mm et/ou des charges inorganiques choisies parmi les microsphères creuses, préférentiellement d'un diamètre compris entre 10 et 300 µm, et les silicates.

9. Kit selon l'une des revendications précédentes **caractérisé en ce que** le constituant A et/ou le constituant B comprend en outre un agent colorant et éventuellement des additifs choisis parmi des tensio-actifs, des agents anti-moussants, des conservateurs, des épaississants, des agents de régulation de prise tels que des accélérateurs ou des retardateurs, des agents liquéfiants.

10. Kit selon l'une des revendications précédentes **caractérisé en ce que** le constituant A a une masse volumique comprise entre 0,5 et 1,2 kg/l, de préférence entre 0,6 et 1,0 kg/l et le constituant B a une masse volumique apparente comprise entre 0,8 et 2,5 kg/l, de préférence entre 1,5 et 1,8 kg/l.

11. Procédé de fabrication d'une membrane d'étanchéité **caractérisé en ce que** les constituants A et B du kit selon l'une des revendications 1 à 10 sont mélangés entre eux, par exemple manuellement, avec un mélangeur électrique ou directement dans une machine de pulvérisation, ledit mélange ainsi obtenu présentant une durée d'ouvrabilité finie permettant de l'appliquer sous forme d'un revêtement sur un support.

12. Membrane d'étanchéité obtenue à partir du kit selon l'une des revendications 1 à 10, ou préparée par le procédé selon la revendication 11.

13. Produits de construction, tels que des parois, murs, chapes, sols, plafonds protégés contre l'humidité et recouverts d'une membrane d'étanchéité selon la revendication 12.

14. Utilisation de la membrane d'étanchéité selon la revendication 12 comme adhésif pour panneau de protection, panneau isolant et/ou panneau de drainage.

## Patentansprüche

1. Kit mit zwei Bestandteilen für die Herstellung einer Dichtungsmembran, **dadurch gekennzeichnet, dass** es besteht aus,
- einer Komponente A, umfassend mindestens ein Bindemittel pflanzlichen Ursprungs in Form einer wässrigen Emulsion, die eine anionische, nicht ionische Emulsion oder eine Mischung aus einer anionischen und einer nicht ionischen Emulsion ist, das Bindemittel umfassend die Mischung von mindestens einem Naturharz pflanzlichen Ursprungs mit mindestens einem Öl pflanzlichen Ursprungs, und
- einer Komponente B, die dazu fähig ist, bei ihrer Reaktion mit dem Bestandteil A mindestens ein mehrwertiges Kation freizusetzen, wobei die Komponente B ein Pulver ist, umfassend einen Zement, der aus Portlandzement, Puzzolanmischzement, umfassend gegebenenfalls Flugasche, Hochofenschlacken, Siliciumdioxidrauch und/oder natürliche oder gebrannte oder synthetische Puzzolane, Tonerdezement, Sulfoaluminiumzement, Belitzement sowie deren Mischungen ausgewählt ist.

2. Kit nach Anspruch 1, **dadurch gekennzeichnet, dass** das Bindemittel eine Durchdringbarkeit bei 25 °C, gemessen gemäß der Norm EN1426, von 20 bis 300 1/10 mm und einen Erweichungspunkt, gemessen gemäß der Norm EN1427, von 30 bis 75 °C besitzt.

3. Kit nach einem der Ansprüche 1 oder 2, **dadurch gekennzeichnet, dass** das Massenverhältnis zwischen der Komponente A und der Komponente B zwischen 1 : 1 und 20 : 1, vorzugsweise zwischen 3 : 1 und 5 : 1, liegt.

4. Kit nach einem der Ansprüche 1 bis 3, **dadurch gekennzeichnet, dass** das Bindemittel pflanzlichen Ursprungs zu zwischen 20 und 90 Gew.-%, vorzugsweise zu zwischen 30 und 60 Gew.-%, die Komponente A ausmacht.

5. Kit nach einem der Ansprüche 1 bis 4, **dadurch gekennzeichnet, dass** die Komponente B anorganische Füllstoffe umfasst.

6. Kit nach einem der Ansprüche 1 bis 5, **dadurch gekennzeichnet, dass** die Komponente A ferner eine wässrige Polymerdispersion umfasst, umfassend zu zwischen 20 und 70 Gew.-%, vorzugsweise zu zwischen 50 und 65 Gew.-%, Feststoffe, wobei die Dispersion zu zwischen 2 und 80 Gew.-% die Komponente A, vorzugsweise zu zwischen 5 und 50 Gew.-% und noch mehr bevorzugt zwischen 10 und 20 Gew.-%, die Komponente A ausmacht.

7. Kit nach einem der Ansprüche 1 bis 6, **dadurch gekennzeichnet, dass** die Komponente B ein in Wasser redispergierbares Polymerpulver in einer Menge zwischen 5 und 30 Gew.-%, bezogen auf die Komponente B, umfasst.

8. Kit nach einem der vorstehenden Ansprüche,
**dadurch gekennzeichnet, dass** die Komponente A ferner organische Füllstoffe, die aus Schaumpolystyrolkugeln, Kautschukgranulaten, recyceltem Kunststoff ausgewählt sind, vorzugsweise in Form von Partikeln, die einen Durchmesser zwischen 0,2 und 1,5 mm besitzen, und/oder anorganische Füllstoffe umfasst, die aus hohlen Mikrokugeln, vorzugsweise mit einem Durchmesser zwischen 10 und 300 µm, und Silikaten ausgewählt sind.

9. Kit nach einem der vorstehenden Ansprüche,
**dadurch gekennzeichnet, dass** die Komponente A und/oder die Komponente B ferner ein Färbemittel und gegebenenfalls Zusatzstoffe umfasst, die aus Tensiden, Antischaummitteln, Konservierungsmitteln, Verdickungsmitteln, Abbinderegelmitteln wie Beschleuniger oder Verzögerer, Verflüssigungsmitteln ausgewählt sind.

10. Kit nach einem der vorstehenden Ansprüche,
**dadurch gekennzeichnet, dass** die Komponente A eine Dichte zwischen 0,5 und 1,2 kg/l, vorzugsweise zwischen 0,6 und 1,0 kg/l, besitzt, und Komponente B eine Rohdichte zwischen 0,8 und 2,5 kg/l, vorzugsweise zwischen 1,5 und 1,8 kg/l, besitzt.

11. Verfahren zum Herstellen einer Dichtungsmembran,
**dadurch gekennzeichnet, dass** die Komponenten A und B des Kits nach einem der Ansprüche 1 bis 10 miteinander vermischt werden, zum Beispiel manuell, mit einem elektrischen Mischer oder direkt in einer Spritzmaschine, wobei die so erhaltene Mischung eine endliche Bearbeitbarkeitsdauer aufweist, die es ermöglicht, sie in Form einer Beschichtung auf einen Träger aufzubringen.

12. Dichtungsmembran, die aus dem Kit nach einem der Ansprüche 1 bis 10 erhalten wird oder durch das Verfahren nach Anspruch 11 hergestellt wird.

13. Bauprodukte, wie Wände, Mauern, Abdeckungen, Böden, Decken, die gegen Feuchtigkeit geschützt und mit einer Dichtungsmembran nach Anspruch 12 bedeckt sind.

14. Verwendung der Dichtungsmembran nach Anspruch 12 als Haftmittel für eine Schutzplatte, Isolierplatte und/oder Drainageplatte.

## Claims

1. Two-component kit for preparing a sealing membrane, **characterized in that** it consists of:
- a constituent A comprising at least one binder of plant origin in the form of an aqueous emulsion which is an anionic, nonionic emulsion or a mixture of an anionic emulsion and a nonionic emulsion,
the said binder comprising a mixture of at least one natural resin of plant origin with at least one oil of plant origin, and
- a constituent B that is capable of releasing at least one multivalent cation during its reaction with component A, said constituent B comprising a cement chosen from Portland cement, pozzolanic cement mixture optionally comprising fly ash, blast furnace slag, fumed silica and/or natural or calcinated or synthetic pozzolans, aluminous cement, sulfo-aluminous cement and belite cement, and also mixtures thereof.

2. Kit according to Claim 1, **characterized in that** the said binder has a penetrability at 25°C, measured according to standard EN 1426, of 20 to 300 1/10 mm and a softening point, measured according to standard EN 1427, of 30 to 75°C.

3. Kit according to either of Claims 1 and 2, **characterized in that** the mass ratio between constituent A and constituent B is between 1:1 and 20:1 and preferably between 3:1 and 5:1.

4. Kit according to one of Claims 1 to 3, **characterized in that** the binder of plant origin represents between 20% and 90% by weight and preferably between 30% and 60% by weight of constituent A.

5. Kit according to one of Claims 1 to 4, **characterized in that** constituent B mineral fillers.

6. Kit according to one of Claims 1 to 5, **characterized in that** constituent A also comprises an aqueous polymer dispersion comprising between 20% and 70% by weight and preferably between 50% and 65% by weight of solids, the said dispersion representing between 2% and 80% by weight of constituent A, preferably between 5% and 50% by weight and even more preferentially between 10% and 20% by weight of constituent A.

7. Kit according to one of Claims 1 to 6, **characterized in that** constituent B comprises a polymer powder that is redispersible in water, in an amount of between 5% and 30% by weight relative to constituent B.

8. Kit according to one of the preceding claims, **characterized in that** constituent A also comprises organic fillers chosen from expanded polystyrene beads, rubber granulates and recycled plastic, preferably in the form of particles with a diameter of between 0.2 and 1.5 mm, and/or mineral fillers chosen from hollow microspheres, preferentially with a diameter of between 10 and 300 µm, and silicates.

9. Kit according to one of the preceding claims, **characterized in that** constituent A and/or constituent B also comprises a colorant and optionally additives chosen from surfactants, antifoams, preserving agents, thickeners, setting regulators such as accelerators or retarders, and liquefying agents.

10. Kit according to one of the preceding claims, **characterized in that** constituent A has a mass per unit volume of between 0.5 and 1.2 kg/l and preferably between 0.6 and 1.0 kg/l, and constituent B has an apparent mass per unit volume of between 0.8 and 2.5 kg/l and preferably between 1.5 and 1.8 kg/l.

11. Process for manufacturing a sealing membrane, **characterized in that** constituents A and B of the kit according to one of Claims 1 to 10 are mixed together, for example manually, with an electric mixer or directly in a spraying machine, the said mixture thus obtained having a finite working time allowing it to be applied in the form of a coating onto a support.

12. Sealing membrane obtained from the kit according to one of Claims 1 to 10, or prepared via the process according to Claim 11.

13. Construction products, such as partitions, walls, screeds, floors or ceilings protected against moisture and covered with a sealing membrane according to Claim 12.

14. Use of the sealing membrane according to Claim 12 as an adhesive for a protective panel, an insulating panel and/or a draining panel.
